# EUROPEAN PATENT APPLICATION

(11) **EP 4 557 206 A1**
(43) Date of publication of application: **21.05.2025**
(21) Application number: 23210144.4
(22) Date of filing: 15.11.2023
(51) Int. Cl.: G06Q 40/03, G06Q 20/24, G06Q 20/40

(54) **METHOD AND SYSTEM FOR IMPROVING CREDIT RISK ASSESSMENT**

(71) Applicant: Mastercard International Incorporated, Purchase NY 10577 (US)
(72) Inventor: IGLIOZZI, Marco, Rome (IT); CORRADINI, Andrea, Milan (IT); ROLLO, Cinzia, Cesano Maderno (IT); BECCU, Gabriele, Cagliari (IT)
(74) Representative: Murgitroyd & Company

(57) **Abstract**

Method for processing a credit risk assessment, comprising the steps of:
- Requesting, by a User, a product and/or service provided by a Merchant and presenting a PAN as payment method,
- Receiving, by the Merchant, said request and said PAN,
- Sending, by the Merchant, a request to the User to collect the consent of the User to obtain from the Financial Institution responsible for the payment processing of payments linked with the PAN payment related risk scoring information concerning the PAN,
- Sending, by the Merchant, a request to said Financial Institution to obtain said payment related risk scoring information,
- Sending, by the Financial Institution, the requested payment related risk scoring information to the Merchant,
- Processing, by the Merchant, of a credit risk assessment using the received payment related risk scoring information, and
- Taking, by the Merchant, a decision on the grant of a credit to the User.

## Description

### Field of the invention

The disclosure relates to the use of the transactional behaviour of a User to allow Merchants to improve their credit assessment during the on-boarding of new Users to thereby mitigate delinquency.

### Background of the invention

Merchants who enable fast on-boarding of new Users can be impacted by the lack of visibility of the creditworthiness of such new Users. In general, Merchants lack the background information on new Users that would allow the completion of a proper risk assessment that provides in-depth information on new Users to permit the on-boarding of new Users, while implementing a minimum level of risk control.

The above-mentioned problem exists, for instance, for online Merchants who enable fast on-boarding of new Users, especially Merchants operating in the BNPL Industry (Buy Now Pay Later). Similar problems exist for Merchants who operate a pre-authorisation model, wherein an initial amount is locked during the on-boarding of a new User, and a balance is due at a later stage. While it is possible that the initial amount is high enough to pay for the product or service that the Merchant is providing, Merchants who apply this sales model can sometimes be confronted at check-out with Users who are not able to pay the balance that is due.

This pre-authorisation payment method is typically popular in relatively new markets, such as the market of shared mobility and the industry of providing electricity for the charging of Electric Vehicles (EV charging).

It is noted that the business volumes of the mentioned BN PL, Mobility sharing and EV charging industries, and therefore also the number of enrolled new Users for the related products and services, are growing rapidly. Thus, there is a growing need for Merchants to improve the accuracy of their analysis methods when assessing the credit-risk linked with the on-boarding of new Users. The increase of accuracy is required to better control costs relating to fraud.

Over the last number of years, global payment fraud has multiplied and reached, according to Merchant Savvy, in the year 2020, a level of more than $ 32 Billion. Studies also show that the success rate of fraud attempt has increased at the same time.

In view of the problems highlighted above and considering the existing problems of assessing creditworthiness based on very little data, it is an objective of the present disclosure to provide a method and a system that allow the provision of additional data to Merchants to thereby enrich the data Merchants can use to run a risk assessment during the on-boarding of new Users. This will allow Merchants to perform more thorough and reliable risk assessments and to increase the possibility of identifying credit risks linked with the on-boarding of new Users.

### Objects of the invention

According to a first aspect, the disclosure relates a method for processing a credit risk assessment, comprising the steps of:
- Requesting, by a User, a product and/or service provided by a Merchant and presenting, by said User, a PAN as payment method,
- Receiving, by the Merchant, the request for the product and/or service and the PAN,
- Sending, by the Merchant, a request to the User to collect the consent of the User to obtain from the Financial Institution, responsible for the payment processing of payments linked with the PAN, payment related risk scoring information concerning the PAN,
- Receiving, by the Merchant, the requested consent from the User,
- Sending, by the Merchant, a request to said Financial Institution to obtain said payment related risk scoring information,
- Preparing, by the Financial Institution, the requested payment related risk scoring information,
- Sending, by the Financial Institution, the requested payment related risk scoring information to the Merchant,
- Receiving, by the Merchant, the requested payment related risk scoring information,
- Processing, by the Merchant, a credit risk assessment using the received payment related risk scoring information,
- Taking, by the Merchant, a decision on the grant of a credit to the User, and
- Informing, by the Merchant, the User of said decision on the grant of a credit.

According to an embodiment the step of receiving, by the Merchant, of the request for the product and/or service and the PAN, the method further, comprises:
- Comparing the received PAN from the User with a list of PANs for known Users and only if the PAN is not present in the list of know Users, continue the process of risk assessment by sending a request to the User to collect the consent.

According to an embodiment, the method further comprises, if the User does not send his consent:
- Processing, by the Merchant, a credit risk assessment using information at PAN level,
- Taking, by the Merchant, a decision on the grant of a credit to the User, and
- Informing, by the Merchant, the User of said decision on the grant of a credit.

According to an embodiment, the step of sending, by the Merchant, a request to said Financial Institution to obtain said payment related risk scoring information comprises:
- Defining, by the Merchant, the payment related risk scoring information that is needed by that Merchant to allow the processing of a credit risk assessment, and
- Requesting, by the Merchant, to obtain said defined payment related risk scoring information from the Financial Institution.

According to an embodiment, the step of preparing, by the Financial Institution, the requested payment related risk scoring information comprises:
- Using, by the Financial Institution, a Database comprising information relating to financial transactions and/or behaviour relating to the PAN.

According to an embodiment, the step of preparing, by the Financial Institution, the requested payment related scoring information comprises,
- Comparing multiple payment related proprietary KPI's, and
- Processing the relevant risk scoring KPI's through a Al solution.

According to an embodiment, the step of preparing, by the Financial Institution, the requested payment related risk scoring information further comprises:
- Producing, by the Financial Institution, scores related to said financial transaction and/or said behaviour linked to the PAN.

According to an embodiment the step of processing, by the Merchant, of a credit risk assessment using the received payment related risk scoring information comprises:
- Executing a risk assessment, by the Merchant, using a dedicated risk assessment tool.

According to an embodiment, the step of informing, by the Merchant, the User of said decision on the grant of a credit comprises:
- Sending, by the Merchant, an electronic message, such as an email or an SMS, to the User.

According to a second aspect, the disclosure relates to a data processing system comprising a processor configured to perform the method of the disclosure.

According to a third aspect, the disclosure relates to a computer program product comprising instructions, which, when the program is executed by a computer, cause the computer to carry out the method of the disclosure.

According to a fourth aspect, the disclosure relates to a computer-readable storage medium comprising instructions which, when executed by a computer, cause the computer to carry out the method of the disclosure.

### Brief description of the drawings

Figure 1 shows a flow chart identifying the different steps of the method of the disclosure and
Figure 2 schematically shows the flow of communications and information between a User, a Merchant and a Financial Institution, according to an embodiment of the disclosure.

### Detailed description of the drawings

In the context of this disclosure, the term PAN level is used. The word PAN refers to a Primary Account Number, which is a unique payment card number that identifies an issuer of typically a Prepaid, Debit or Credit card and the particular cardholder account.

In the context of this disclosure, the term 'payment card' is used. As examples of payment cards, reference is made to Prepaid, Debit and Credit. It is noted that the present description relates to the improvement of risk assessment linked to the use of a payment card. It should be understood that the description is not limited to the example of Prepaid, Debit and Credit cards, but also refers to any other form of payment card, for which, prior to acceptance of the card, an assessment linked to the risk of the card could be envisaged.

In the present disclosure, the term "creditworthiness of a User" is used. In the context of this description, a User is considered creditworthy if the User can fully pay the product or service the User commits to paying for by presenting their payment card. If, at any moment during the transaction, for instance during the check-out step, the User cannot fully pay for a requested product or service, which means that there is a difference between the amount the User is required to pay and the amount the User is able to pay, the User is not considered to be creditworthy.

In the present disclosure, the term POS transaction is used. In the context of this description, the term POS transaction refers to Point-Of-Sale transaction, which means a purchase made with a payment card whereby the User is obliged to enter a private PIN code on a key pad.

In the present disclosure, the term 'payment related risk information' is used. This term refers to any information relating to financial transactions related to a PAN of a User and/or the behaviour of the User linked to said PAN.

The present disclosure specifically refers to methods and systems to allow Merchants to receive additional information about a specific User which will then allow the Merchant to perform a better assessment of creditworthiness than that which would have been completed without such additional information.

In the present disclosure, several examples are described of Merchants that could use the improvements of the present disclosure. In particular, reference is made to the use of the improvements for Merchants operating in the following industries: the BNPL industry, the shared mobility industry and the EV charging industry. It should be understood that these are non-limiting examples of fast growing markets. The improvements provided by the method and the system according to the description can also be used in other industries, like in general in e-commerce (online) transactions.

Merchants who enable fast on-boarding of new Users can be impacted by the lack of visibility of the creditworthiness of new Users. In general, these Merchants lack the background information on the User that would allow a proper risk assessment related to the on-boarding of the new Users to be performed.

The above-mentioned problem, for instance, exist for online Merchants who enable fast on-boarding of new Users, especially Merchants operating in the BNPL Industry (Buy Now Pay Later). In this industry, a Merchant will typically be faced with the issue that User profiling should be executed in real time and that a credit line should be granted instantly. The problem with this is that the information the Merchant receives is at PAN level only. At PAN level, the PAN will allow the identification of the issuer of typically a Prepaid, Debit or Credit card and also the particular cardholder account. While this information is useful, in practice, it can prove to provide too few details about the actual risk of granting a credit line to a User. Thus, a Merchant can be confronted with fraud at a later stage of the procedure. The risk the Merchant will take during on-boarding is related to the insolvency on an instalment or the ability to pay other types of services provided.

Similar problems exist for Merchants who operate in the industry of shared mobility. In this industry, a User demands access to the use of a vehicle. In this industry, the process of on-boarding typically comprises a first step of registration of the User. In a second step, a pre-authorisation is requested at the check-in of the vehicle. This pre-authorisation means that a certain amount of money is locked to allow the rental period of the vehicle to start. It is possible that the initial amount of money requested is not enough to pay for the full rental period. Thus, the Merchant has to wait until the check-out stage to find out whether the User has sufficient funds to pay for the full service provided or whether the User has insufficient funds to pay for said service.

A similar procedure for on-boarding Users is used in the industry of EV charging. In this industry, the process of on-boarding typically comprises a first step of registration of the User. In a second step, a pre-authorisation is requested at the check-in of the vehicle. This pre-authorisation means that a certain amount of money is locked to allow the charging of the vehicle to start. It is possible that the initial amount of money requested is not enough to pay for the full charge that is subsequently provided. Thus, the Merchant will have to wait until the check-out stage to find out whether the User has sufficient funds to pay for the full charging as provided or whether the User has insufficient funds to pay for said service.

The problem Merchants will have to face in each of the examples provided above is that the assessment of the risk of providing a credit line to a new User has to be made in real time, based on very little information. The assessment should be performed at PAN level, while the information owned by the Merchant is, in practice, not sufficient to properly perform an assessment that allows the level of fraud to an accepted maximum to be controlled.

It is noted that the more sophisticated Merchants will operate their own assessment software tools to perform the assessment of the creditworthiness of new Users. Such assessment tools can comprise Artificial Intelligence (IA) or Artificial Intelligence based modules to enhance the performance of such assessment tools. The problem with the use of such tools is that they cannot provide optimal results if the input provided to these tools is insufficient.

In view of the above described problems and limitations of the assessment procedures and systems according to the prior art, it is an objective of the disclosure to provide a method and a system to provide Merchants with additional data to allow Merchants to enrich the data to be used to run a risk assessment. The aim of the provision of additional data to Merchants is to increase the possibility for Merchants to identify possible credit risks linked with new Users.

According to the present disclosure, it is recognised that financial institutions responsible for the processing of payments related to Prepaid, Debit and Credit cards have at their disposal databases comprising data relating to transactions and data relating to behaviour of Prepaid, Debit and Credit card Users. An example of such a financial institution responsible for payment processing is Mastercard ^{©}. According to the present disclosure it is appreciated that the Merchants do not have access to information regarding the insolvency risks, whilst Financial Institutions, like Mastercard ^{©}, possess the historical transaction information of Users at PAN level and therefore are able to assess risk.

According to the present disclosure, it is recognised that the databases operated by the financial institutions that process payments comprise valuable information about the transactions completed by Users in the past that could help Merchants to enrich the information on which they base their own assessment of creditworthiness. Providing such additional information to Merchants would contribute to a higher accuracy of the assessment of creditworthiness that is completed by the Merchants and would help to mitigate delinquency linked to the use of payments cards.

In view of the above observations, according to the present disclosure, the process of on-boarding a new User and the process of assessing the creditworthiness of a new User comprise a number of steps, which will be described with reference to the drawings.

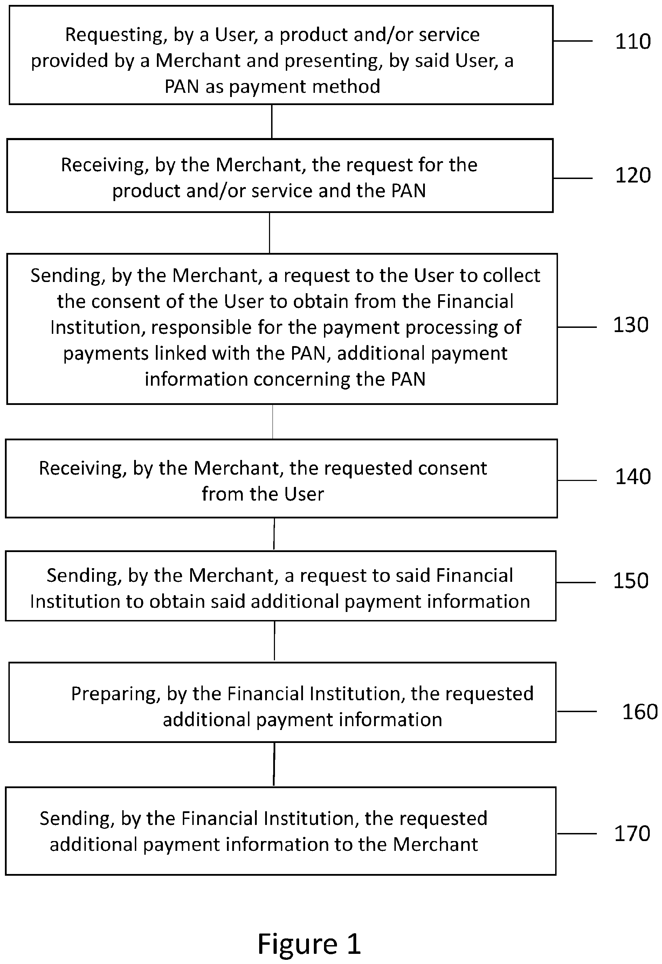

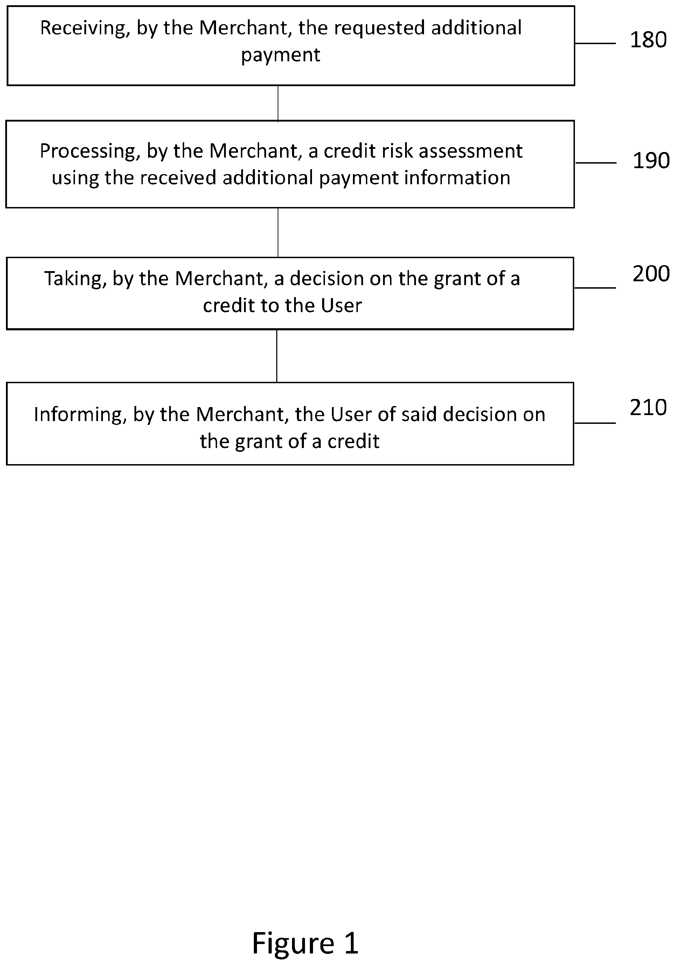

Figure 1 shows a flow chart of the steps of the method according to the disclosure.

In a first step 110, a User requests a product and/or service provided by a Merchant and presents a PAN as payment method.

In second step 120, the Merchant receives the request for the product and/or service and the PAN of the User.

In a third step 130, the Merchant sends a request to the User to collect the consent of the User to obtain from the Financial Institution responsible for the payment processing of payments linked with the PAN additional payment related information concerning the PAN.

In a fourth step 140, the Merchant receives the requested consent from the User.

In a fifth step 150, the Merchant sends a request to said Financial Institution to obtain said payment related risk scoring information.

In a sixth step 160, the Financial Institution prepares the requested payment related risk scoring information

In a seventh step 170, the Financial Institution sends the requested payment related risk scoring information to the Merchant.

In an eighth step 180, the Merchant receives the requested payment related risk scoring information.

In a ninth step 190, the Merchant processes a credit risk assessment using the received payment related risk scoring information.

In a tenth step 200, the Merchant takes a decision on the grant of a credit to the User.

In an eleventh step 210, the Merchant informs the User of said decision on the grant of a credit.

### Example

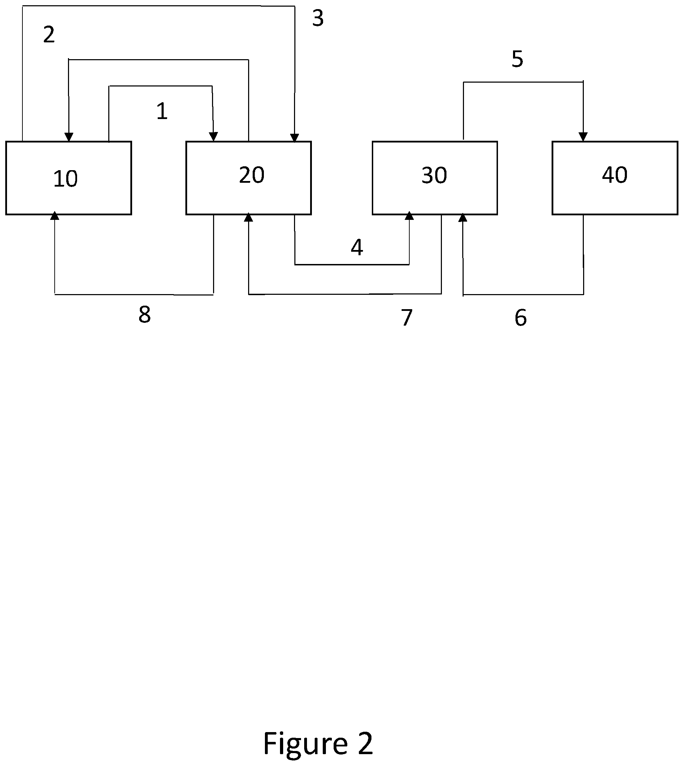

The sequence of steps as shown in Figure 1 is represented in the block diagram of Figure 2.

According to figure 2, box 10 represents a User, such as a new User who enrols for a Merchant's service or product. Box 20 represents a Merchant with whom the User 10 wishes to communicate to obtain a product or service. Box 30 represents a Financial Institution responsible for the processing payments, such as, for instance, Mastercard ^{®}. Box 40 represents a Database operated by the Financial Institution 30, such as a Database in the form of an Al engine, comprising data relating to financial transactions of Users and/or data relating to the behaviour of Users.

In a first step 1, the User 10 contacts a Merchant 20 to enrol for a Merchant product or service. The User 10 provides a valid PAN as payment method. In the example of the financial institution 30 being Mastercard ^{®}, the PAN provided by the User 10 is a valid Mastercard ^{®} PAN.

The Merchant 20 receives the request of the User 10. In response, the Merchant 20 requests in step 2 the consent of the User 10 to allow the Merchant 20 to send the PAN to the Financial Institution 30 to obtain from the Financial Institution 30 additional information about the financial transactions and behaviour linked to the PAN provided. To request consent, the Merchant 20 asks the User 10 if the User 10 allows the Merchant 20 to obtain the transaction history linked to the PAN from the Financial Institution 30 responsible for the processing of payments made with the presented payment card.

The User 10 responds to the request for consent by providing a response in step 3 of the procedure.

Where the User 10 in step 3 does not give consent, the Merchant 20 has a variety of options. A first option is that the Merchant 20 takes the refusal of the consent as a sign that the provision of a credit line to the User 10 is linked with a risk. Therefore, the Merchant 20 may decide to deny the User 10 access to the requested product or service. Alternatively, the Merchant 20 may decide to run a risk assessment at PAN level and thereafter decide to grant a credit line, taking into account the refusal to provide consent. As a further alternative, the Merchant 20 may decide any other way of processing the request of the User 10 according to their own preferences.

According to Figure 2, the Merchant 20 informs the User 10 of the decision taken in step 8.

Where the User 10 gives consent in step 3, the procedure according to Figure 2 continues with step 4 wherein the Merchant 20 submits the PAN to the Financial Institution 30, with, additionally, the request to provide additional information relating to the financial transactions and behaviour linked to the PAN.

The Financial Institution 30 receives the PAN and the related request from the Merchant 20. Subsequently, in step 5, the Financial Institution 30 inputs the received PAN into a Database 40 operated by the Financial Institution 30. This Database 40 comprises information about financial transactions related to the PAN. The Database 40 may have the form of an Al engine. Thus, in the context of the present description, among others, the Database 40 is able to process a large amount of data relating to payments and is able to receive specific instructions to allow analysis of the transactions stored in the Database 40. The Database 40 is further adapted to output specific scores relating to transactions and behaviour linked to a specific entered PAN.

The Database 40 will output scores relating to the data stored in the Database 40 and linked to the PAN that has been presented to the Database 40. In step 6, the Database 40 will make these scores available to the Financial Institution 30.

In the next step 7, the Financial Institution 30 shares these scores with the Merchant 20. The Merchant 20 receives the scores as provided by the Financial Institution 30. The Merchant 20 enters the received data into their risk assessment tool. This means that the Merchant 20 uses the received scores relating to a specific PAN to enrich the data that Merchant 20 has already stored in their risk assessment tool related to the same PAN.

In yet a further step, the Merchant 20 completes a risk assessment with the objective of making a decision on the risk related to providing a credit line to the User 10. This risk assessment may be completed in real-time. It is further noted that the Merchant 20 executes the risk assessment on a dedicated tool, which can comprise an IA engine operated by the Merchant 20.

After running the risk assessment, the Merchant 20 obtains an indication of the risk relating to the granting of a credit line to the User 10.

In this part of the procedure, the Merchant 20 has come to a stage where they can come to a number of conclusions and take a variety of decisions. A first possible conclusion can be that the payment card is verified and that the payment card is considered as safe for allowing payments to the Merchant 20. Based on this determination, the Merchant may decide to allow the granting of a credit line to the User 10. As an option, the Merchant 20 may also decide to give a credit line to the User 10 for the present transaction and for any future transactions. This means that if the same PAN is presented to the Merchant 20 in a future transaction, instead of asking consent and forwarding the PAN to the Financial Institution 30, the Merchant 20 may decide to shortcut the procedure for future payments and directly accept the PAN for payment of the requested product or service.

A further possibility is that, after completion of the risk assessment, the Merchant 20 concludes that the payment card is not fully secure. This could mean that the Merchants accepts the payment card for the requested transaction, but that the Merchant 20 puts a system in place to carefully monitor the payment transactions completed with the card and to stop providing products and/or services as soon as the Merchant 20 detects any payment incidents.

Yet another possibility is that the Merchant 20 concludes, based on the completed risk assessment, that the card is not secure. This conclusion can subsequently lead to a number of decisions. For instance, the Merchant 20 may accept the payment and may accept the related risk. Alternatively, the Merchant 20 may accept the use of the card, but may request a pre-authorisation for a certain amount or request a security deposit. A further option is that the Merchant 20 decides that, based on the determination of the fact that the card is not secure, payment by means of the card is refused.

After the Merchant 20 has a reached a decision on the grant of a credit to the User 10, the Merchant 20 informs the User 10 of this decision in step 8.

It will be understood that the specific conclusions as determined by the Merchant 20 very much depend on the specific industry wherein the Merchant 20 is active and on the average amount of a purchase in that industry. The higher the amount involved, the stricter the rules that an individual Merchant will apply in accepting or refusing payments.

It is further noted that the specific information that a Merchant 20 requests from the Financial Institution 30 may vary from Merchant to Merchant and can depend on the specific industry in which a Merchant 20 is active. The information to be sent to the Merchant 20 shall typically be predefined during the set-up of the system between the Merchant and the Financial Institution. The requested information is preferably standard for each query. In addition, the specific content of the information that is requested, is jointly defined by the Financial Institution 30 and the Merchant 20.

As an example, the data provided based on the following criteria may be used by the Database 40 to produce a score. Such criteria may be, among others:
- has the card that has been presented by the User 10 been used for a first transaction less than three months ago?;
- has the card that has been presented by the User 10 been used for completing at least one E-Commerce transaction during the last three months?;
- has the card that has been presented by the User 10 been refused at least one time for lack of funds during the last three months?;
- has there been at least one POS transaction during the last three months?;
- has there been at least one recurring transaction during the last three months?;
- what is the spend level based on percentiles?;
- what is the transaction level based on percentiles?;
- what is the average ticket level on percentiles?;
- has there been any transaction noted over the last 12 months?

It will be understood that, depending on the business of a Merchant 20, the relevance of each of the above-mentioned questions can differ. Each Merchant 20 may indicate which specific details relating to the behaviour of a User 10 should be highlighted in any assessment performed by the Financial Institution 30 by means of its Database 40.

It is further noted that the Financial Institution can combine the lists of questions relating to the behaviour of specific Users and the answers to those questions with information, which is already held by the Financial Institution 30.

In the example of Mastercard ^{®}, the information that is already stored, will, for instance, be available via solutions which are owned by Mastercard ^{®}. A first example of such an owned solution is Ekata ^{®}, which is a tool that is specifically dedicated to fraudulent user accounts. A further example is Brighterion ^{®}, which is a tool that is dedicated to identifying early signs of credit delinquency. Another example is the use of a data driven Al score, which is a tailored data driven solution to enable better credit decision making.

In addition to the above mentioned solutions, according to the present disclosure the information requested by the Merchant 20 can be completed by the use of specific tools that are dedicated to the verification of the identity of a User 10. This means that existing tools can be combined with the method and system of the present disclosure to thus obtain an even richer amount of data on which a risk assessment can be based.

It is further noted that according to the present description, a Merchant 20 may ask the Financial Institution 30 to produce data relating a valid PAN, once the PAN has been presented as a valid payment means. In addition, a Merchant 20 may ask the Financial Institution 30 to produce data relating to a specific PAN periodically. The method and the system described above provides for a dynamic method and system wherein the data relating a specific PAN will be updated continuously. A Merchant 20 could decide that they want to obtain additional data from the Financial Institution 30 during the on-boarding of a new User 10 and at set intervals in order to monitor the creditworthiness of the User 10 over time.

## Claims

1. Method for processing a credit risk assessment, comprising the steps of:
- Requesting, by a User, a product and/or service provided by a Merchant and presenting, by said User, a PAN as payment method,
- Receiving, by the Merchant, the request for the product and/or service and the PAN,
- Sending, by the Merchant, a request to the User to collect the consent of the User to obtain from the Financial Institution, responsible for the payment processing of payments linked with the PAN, payment related risk scoring information concerning the PAN,
- Receiving, by the Merchant, the requested consent from the User,
- Sending, by the Merchant, a request to said Financial Institution to obtain said payment related risk scoring information,
- Preparing, by the Financial Institution, the requested payment related risk scoring information,
- Sending, by the Financial Institution, the requested payment related risk scoring information to the Merchant,
- Receiving, by the Merchant, the requested payment related risk scoring information,
- Processing, by the Merchant, a credit risk assessment using the received payment related risk scoring information,
- Taking, by the Merchant, a decision on the grant of a credit to the User, and
- Informing, by the Merchant, the User of said decision on the grant of a credit.

2. Method according to claim 1, wherein after the step of receiving, by the Merchant, of the request for the product and/or service and the Pan, the method further, comprises:
- Comparing the received PAN from the User with a list of PANs for known Users and only if the PAN is not present in the list of known Users, continue the process of risk assessment by sending a request to the User to collect the consent.

3. Method according to claim 1 or 2, wherein the method further comprises, if the User does not send his consent:
- Processing, by the Merchant, a credit risk assessment using information at PAN level,
- Taking, by the Merchant, a decision on the grant of a credit to the User, and
- Informing, by the Merchant, the User of said decision on the grant of a credit.

4. Method according to claim 1, 2 or 3, wherein the step of sending, by the Merchant, a request to said Financial Institution to obtain said payment related risk scoring information comprises:
- Defining, by the Merchant, the payment related risk scoring information that is needed by that Merchant to allow the processing of a credit risk assessment, and
- Requesting, by the Merchant, to obtain said defined payment related risk scoring information from the Financial Institution.

5. Method according to claim 1, 2, 3 or 4, wherein the step of preparing, by the Financial Institution, the requested payment related risk scoring information comprises:
- Using, by the Financial Institution, a Database comprising information relating to financial transactions and/or behaviour relating to the PAN.

6. Method according to 5, wherein the step of preparing, by the Financial Institution, the requested payment related risk scoring information further comprises:
- Comparing multiple payment related proprietary KPI's, and
- Processing the relevant risk scoring KPI's through a Al solution.

7. Method according to claim 5 or 6, wherein the step of preparing, by the Financial Institution, the requested payment related risk scoring information further comprises:
- Producing, by the Financial Institution, scores related to said financial transaction and/or said behaviour linked to the PAN.

8. Method according to any of the preceding claims, wherein the step of processing, by the Merchant, a credit risk assessment using the received payment related risk scoring information comprises:
- Executing a risk assessment, by the Merchant, using a dedicated risk assessment tool.

9. Method according to any of the preceding claims, wherein the step of informing, by the Merchant, the User of said decision on the grant of a credit comprises:
- Sending, by the Merchant, an electronic message, such as an email or an SMS, to the User.

10. A data processing system comprising a processor configured to perform the method of any of claims 1 to 9.

11. A computer program product comprising instructions which, when the program is executed by a computer, cause the computer to carry out the method of any of claims 1 to 9.

12. A computer-readable storage medium comprising instructions which, when executed by a computer, cause the computer to carry out the method of any of claims 1 to 9.
